# EUROPEAN PATENT APPLICATION

(11) **EP 2 281 723 A1**
(43) Date of publication of application: **09.02.2011**
(21) Application number: 08752950.9
(22) Date of filing: 19.05.2008
(51) Int. Cl.: B60R 21/20, B60K 37/00

(54) **AIRBAG DOOR FOR MOTOR AND METHOD OF MANUFACTURING THE SAME**

(71) Applicant: Kanto Auto Works, Ltd., Yokosuka-shi, Kanagawa 237-8585 (JP)
(72) Inventor: MATSUDA, Katsuhiro, Yokosuka-shi Kanagawa 237-8585 (JP); SUGIYAMA, Daisuke, Yokosuka-shi Kanagawa 237-8585 (JP)
(74) Representative: Peckmann, Ralf
(86) International application number: PCT/JP2008/059154
(87) International publication number: WO 2009/141863

(57) **Abstract**

[Problem to Be Solved]

To provide an airbag door for a motor vehicle and its manufacture method which can eliminate the necessity of forming a tear line at an outer skin portion in an area corresponding to a door substrate member portion of an instrument panel manufactured by bonding, to a substrate member, an outer skin member in which a foam layer is bonded to an outer skin.

[Means to Solve the Problem]

An airbag door is formed integrally with an instrument panel where an outer skin member 10, in which a foam layer 12 is bonded to an outer skin 11, is bonded and laminated to a substrate member 4, and a tear line for performing fracture and deployment when an airbag is in operation is formed at a door substrate member portion of a substrate member 4. An adhesive strength between the foam layer and the above-mentioned door substrate member portion is set as a peel strength of at least 10N/25mm width or more. In the above-mentioned outer skin member 10, an outer skin single body fracture strength is set to 1.4-12.0 MPa, an outer skin single body elongation at break is set to 200 - 600%, and a peel strength between the foam layer and the outer skin is set to a range of 10 - 50N/25mm width.

## Description

### Technical Field

The present invention relates to an airbag door for a motor vehicle and a method of manufacturing the airbag door, in which a tear line for carrying out fracture and deployment when an airbag is in operation is formed at a substrate member portion of the airbag door which is formed integrally with an instrument panel.

### Background Art

Some airbag doors are formed integrally with an instrument panel where an outer skin member, in which a foam layer is bonded to an outer skin, is bonded and laminated to a substrate member, wherein a tear line for performing fracture and deployment when an airbag is in operation is formed at a door substrate member portion of a substrate member.

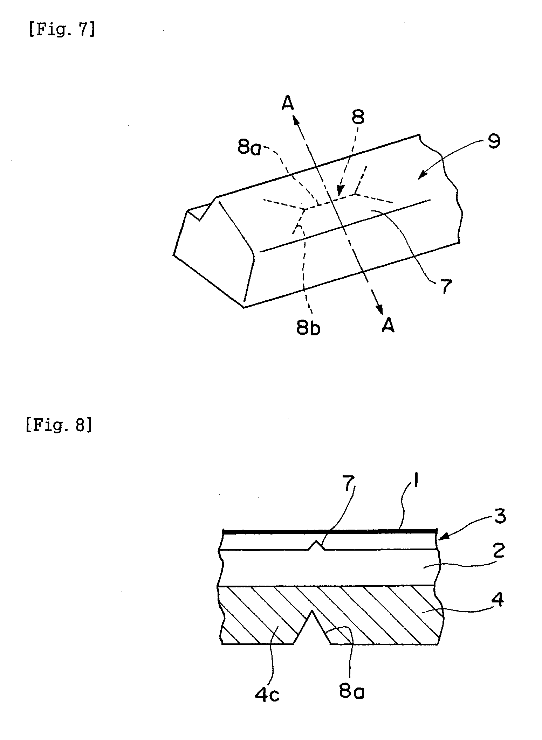

FIG. 7 is a perspective view of a motor vehicle instrument panel 9, with which this type of conventional airbag door 7 for a front passenger seat is formed integrally, and FIG. 8 is a sectional view taken along line A-A of FIG. 7.
As shown in the sectional view of FIG. 8, the airbag door 7 of the instrument panel 9 is formed of three layers in which a foam layer 2 made of urethane is interposed between an outer skin 1 made of TP0 (thermo-plastic olefin) and a substrate member 4, whereby the foam layer 2 is joined to the outer skin 1 to form an outer skin member 3.

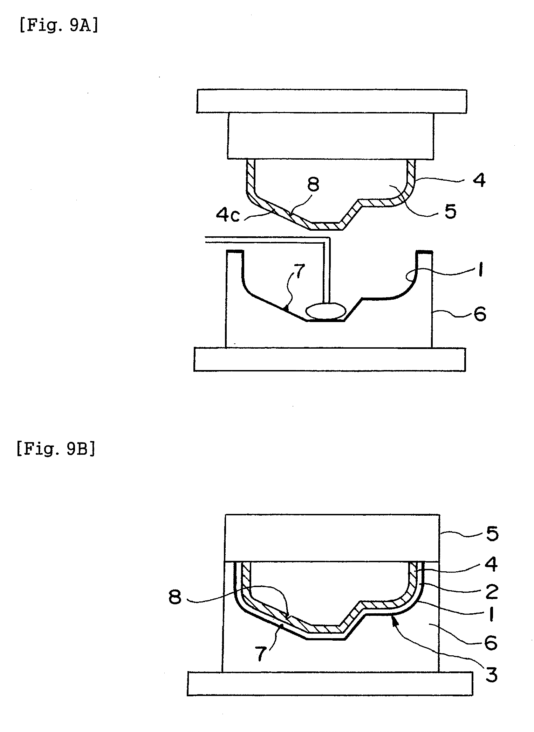

A conventional moulding process for the manufacture of this instrument panel will be described with reference to FIG. 9. The substrate member 4 is injection moulded and made of PP (polypropylene), for example. By way of post-processing, a tear line (fracture path) 8 (see FIG. 7) which is thin, double Y-shaped, and symmetrical about a base point of Y, for example, and allows four sides to open is formed at a door substrate member portion 4c to permit the fracture and deployment upon operation of the airbag.
In other words, as shown in FIG. 7, this tear line is formed of a central tear line portion 8a in a car width direction, and two V-shaped tear line portions 8b which are on both ends thereof, are formed symmetrically about a center or a line, and become gradually narrower towards the center. Further, by way of post-processing of perforation, air passages are formed and distributed, and the substrate member 4 is set to an upper mould 5 (FIG. 9A).

The outer skin 1 is manufactured by way of vacuum suction and formation by means of a vacuum suction mould in a situation where it is heated and softened, during which time, corresponding to the above-mentioned double Y-shaped tear line 8, a thin tear line 7 is formed in the back of the outer skin 1 having a relatively larger elongation rate compared with the foam layer 2, and is set to a lower mould 6 (FIG. 9A).
In the case of poor adhesiveness with respect to urethane, like that made of PP, the substrate member 4 is subjected to a flame process or a primer process. Subsequently, a foaming urethane material is injected onto the outer skin 1 and allowed to foam in a situation where the moulds are clamped, so that the instrument panel 9 of three layers in which the foam layer 2 is interposed is manufactured (FIG. 9B).

Thus, conventionally, it is common to form and process the tear line by post-processing. While, as for the tear line at this type of outer skin member, Patent Document 1 discloses a method in which after forming the outer skin member by way of press moulding by means of both the male and female thermoforming moulds not via post-processing such as cutting etc., the tear line is thermoformed by pulling and retracting a knife member attached to the male mould at the time of vacuum suction from the female mould.
Patent Document 1: Japanese Patent Publication (KOKAI) No. 2003-145617

### DISCLOSURE OF THE INVENTION

### Object of the Invention

However, according to Patent Document 1, the tear line can be formed at the time of moulding, but it is necessary for its shape to consider strength of the outer skin member as with the case where the post-processing is required, and it is necessary to repeat trial production for setting the strength at the thin outer skin member delicately so that inflation ability of the airbag body may not be affected.
Furthermore, since a lot of thought and effort are required at such a trial production stage, there is a problem that the cost for equipment increases.

In order to solve the above-mentioned problem, it is desirably arranged that the outer skin can be broken at the time of airbag deployment without forming the tear line at the outer skin portion in an area corresponding to the door substrate member portion of the instrument panel.
In a situation where the tear line is not formed at the outer skin portion corresponding to the door substrate member portion, tensions generated at the time of the fracture and deployment of the above-mentioned door substrate member portion need to be concentrated on a predetermined area of the outer skin member (foam layer and outer skin) in order to break the outer skin. In other words, adhesive strength between the outer skin member and the substrate member needs to be powerful in order to transmit the tensions generated at the time of the fracture and deployment of the door substrate member portion to the outer skin member effectively.
However, when bonding the outer skin member to the substrate member integrally at the time of forming the airbag door, bubbles may easily be included between the foam layer and the substrate member, and the adhesive strength may decrease due to the inclusion of the bubbles. In this case, there is a possibility that it might not fracture unless the tear line is formed at the outer skin.

In view of the above, the present invention aims at providing an airbag door for a motor vehicle and its manufacturing method for eliminating the necessity of forming a tear line at an outer skin portion in an area corresponding to a door substrate member portion of an instrument panel manufactured by bonding, to a substrate member, an outer skin member in which a foam layer is bonded to an outer skin.

### Means to Solve the Problem

In order to solve the above mentioned problem, the airbag door for the motor vehicle in accordance with the present invention is an airbag door for a motor vehicle, in which an airbag door is formed integrally with an instrument panel where an outer skin member, in which a foam layer is bonded to an outer skin, is bonded and laminated to a substrate member, and a tear line for performing fracture and deployment when an airbag is in operation is formed at a door substrate member portion of a substrate member, wherein an adhesive strength between the foam layer and the above-mentioned door substrate member portion is set as a peel strength of at least 10N/25mm width or more, and in the above-mentioned outer skin member, an outer skin single body elongation at break is set to 200 - 600%, an outer skin single body fracture strength is set to 1.4-12.0 MPa, and a peel strength between the foam layer and the outer skin is set to a range of 10 - 50N/25mm width.

The airbag door is thus constructed, so that the outer skin can be fractured as the airbag body inflates.
In other words, even if the adhesive strength with respect to the door substrate member portion of the foam layer is as small as the peel strength of approximately 10N/25 mm width due to the inclusion of the bubbles etc., it is possible to fracture the outer skin reliably at the time of the airbag deployment.
Further, since a range of management of the adhesive strength between the substrate member and the foam layer is widened, the cost for adhesives can be reduced by using the adhesives of a low adhesive strength intentionally.
Furthermore, a yield of formed products can be improved and the reliability of the airbag deployment performance can also be raised.

Further, it is desirable that the above-mentioned tear line is formed in a double Y shape where a central tear line portion and V-shaped tear line portions which become gradually narrower towards both ends of the central tear line portion are symmetrically provided on both sides, a foaming rate and a thickness of the above-mentioned foam layer and a thickness of the above-mentioned outer skin portion are determined such that a fracture portion which elongates following the fracture and deployment of the above-mentioned door substrate member portion and fractures throughout the above-mentioned whole thickness of the above-mentioned foam layer is formed, whereby the above-mentioned outer skin portion with no tear line is caused to fracture by tensions concentrated at the fracture portion, to obtain a predetermined inflation shape of an airbag body.

By arranging in this way, as for the door substrate member portion, the V-shaped tear line portions are also urged in a deployment direction by way of the fracture and deployment of the central tear line portion, so that the door substrate member portion carries out the fracture and deployment along the double Y-shaped tear line to allow four sides to open, during which tensions are generated intensively at the foam layer in a situation where the foam layer which can secure a predetermined elasticity of the outer skin member is bonded to the substrate member, further the foam layer does not exfoliate but fractures throughout thickness, since a concentrated stress and a thickness are adjusted with the foaming rate. Subsequently, in a situation where the foam layer is bonded to the outer skin, tensions are generated intensively at the fracture portion in the whole thickness area of the foam layer at the time of the fracture and deployment of the foam layer, to thereby expand and break the outer skin.

Further, the manufacture method in which the instrument panel having the airbag door for the motor vehicle as describe above is manufactured by the formation process with low cost and a surface quality of the outer skin is also improved is characterized in that a thermoplastic outer skin member in which the foam layer is joined to the outer skin is supported flat, a vacuum suction mould for the substrate member is provided on one of two sides in the up/down direction with respect to the outer skin member, a vacuum suction mould for the outer skin member, having a mould surface corresponding to a predetermined surface shape of the above-mentioned outer skin is provided on the other side in an opposite state, the substrate member in which the tear line is formed at the door substrate member portion and the air passages are formed and distributed is set at the vacuum suction mould, and the above-mentioned vacuum suction mould for the substrate member and the above-mentioned vacuum suction mould for the outer skin member are clamped in a situation where the above-mentioned outer skin member is softened by a heat-treatment, whereby the above-mentioned foam layer is bonded to the above-mentioned substrate member by carrying out vacuum suction from both sides by means of the vacuum suction moulds in the situation where the moulds are clamped, and the above-mentioned foam layer is compressed or expanded to form the above-mentioned outer skin member along a mould surface of the vacuum suction mould for the outer skin member.

### Effect of the Invention

According to the present invention, it is possible to provide the airbag door for the motor vehicle and its manufacture method which can eliminate the necessity of forming the tear line at the outer skin portion in the area corresponding to the door substrate member portion of the instrument panel manufactured by bonding, to the substrate member, the outer skin member in which the foam layer is bonded to the outer skin.

### BRIEF DESCRIPTION OF THE DRAWINGS

FIG. 1A is a sectional view of an outer skin member of an instrument panel with an airbag door in accordance with a preferred embodiment of the present invention.
FIG. 1B is a schematic sectional view of a vacuum forming apparatus for explaining a process of carrying out vacuum adhesion of the outer skin member of FIG. 1A to a substrate member.
FIG. 1C is a schematic sectional view of the vacuum forming apparatus for explaining a process of carrying out vacuum adhesion of the outer skin member of FIG. 1A to the substrate member.
FIG. 2A is a view for explaining an operation process of the above-mentioned airbag door.
FIG. 2B is a view for explaining an operation process of the above-mentioned airbag door.
FIG. 2C is a view for explaining an operation process of the above-mentioned airbag door.
FIG. 3A is a view for explaining a structure of a sample piece in Example 1 corresponding to the above-mentioned airbag door.
FIG. 3B is a view for explaining a structure of a sample piece in Example 1 corresponding to the above-mentioned airbag door.
FIG. 4 is graph showing examination results of the sample piece in Example 1.
FIG. 5A is a view for explaining a structure of a sample piece in Example 2 corresponding to the above-mentioned airbag door.
FIG. 5B is a view for explaining a structure of the sample piece in Example 2 corresponding to the above-mentioned airbag door.
FIG. 6A is a graph for explaining a peel strength of the sample piece in Example 2.
FIG. 6B is a graph for explaining a peel strength of the sample piece in Example 2.
FIG. 7 is a partially schematic perspective view of the instrument panel to be a subject matter of the present invention.
FIG. 8 is a sectional view taken along line A-A of FIG. 7.
FIG. 9A is a view for explaining a vacuum adhesion process for a substrate member of a conventional outer skin member of the instrument panel.
FIG. 9B is a view for explaining the vacuum adhesion process for the substrate member of the conventional outer skin member of the instrument panel.

### DESCRIPTION OF REFERENCE SIGNS

- 4:: substrate member
- 4c:: door substrate member portion
- 5, 16:: vacuum suction mould
- 5a:: core
- 7:: airbag door
- 9:: instrument panel
- 8:: tear line
- 8a:: central tear line portion
- 8b:: V-shaped tear line portion
- 9:: instrument panel
- 10:: outer skin member
- 11:: outer skin
- 12:: foam layer
- 13:: olefinic adhesive
- 16a:: cavity
- 16b:: mould surface
- 18:: clamp

### BEST MODE FOR IMPLEMENTING THE INVENTION

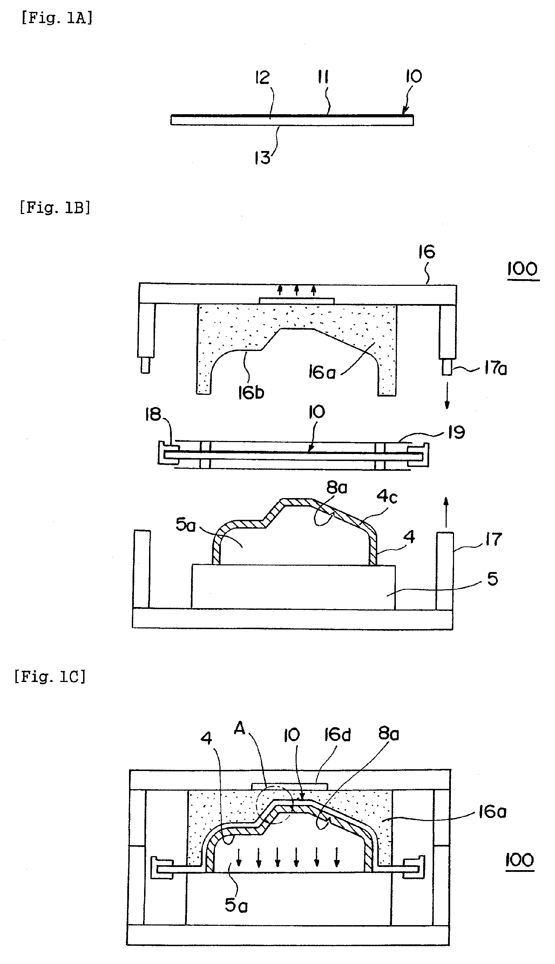

Hereafter, the preferred embodiments of an airbag door for a motor vehicle and its manufacturing method in accordance with the present invention will be described with reference to the drawings. It should be noted that the present invention is applied to the instrument panel 9 provided with the airbag door 7 as described above with reference to FIG. 7, and like or the same parts as those described above will be explained with the same reference signs.
The airbag door in accordance with the present invention is formed by a vacuum forming apparatus 100 for integral formation as shown in FIG. 1 (FIGS. 1B and 1C), for example. The vacuum forming apparatus 100 for integral formation bonds the outer skin member 10 without tear line as shown in FIG. 1A to the substrate member 4.

As shown in FIG. 1A, the outer skin member 10 is constituted by an outer skin 11 and a foam layer 12 bonded to the bottom thereof. As shown in FIG. 1B, when set to the vacuum forming apparatus 100 for integral formation, this outer skin member 10 is supported as both its ends are pulled flat by clamps 18.
In this situation, a vacuum suction mould 5 for the substrate member 4 is provided under the outer skin member 10 (clamps 18) above which a vacuum suction mould 16 is provided having an electroformed porous cavity 16a which faces towards a core portion 5a and has a mould surface corresponding to a surface shape of the instrument panel 9.

The male vacuum suction mould 5 for the substrate member and the female vacuum suction mould 16 for the outer skin member are moved up and down towards the clamps 18 with an attached lift apparatus (not shown); as shown in FIG. 1C, both connection instruments 17 and 17a carry out concavo-convex engagement, so that the moulds are clamped.
Heaters 19 for heating the outer skin member 10 from both sides are provided on the upper and lower surface sides of the clamps 18 and can move to laterally retracted positions when the moulds are clamped.

Further, a mould surface 16b of the cavity 16a is substantially analogous to a mould surface of a core 5a or a surface of the substrate member 4, and is formed in the predetermined surface shape of the instrument panel 9. As for mould surfaces of the core 5a and the cavity 16a, cavities having a separation distance which allows vacuum suction from both sides in a situation where the moulds are clamped are formed at the substrate member 4 and the outer skin member 10.

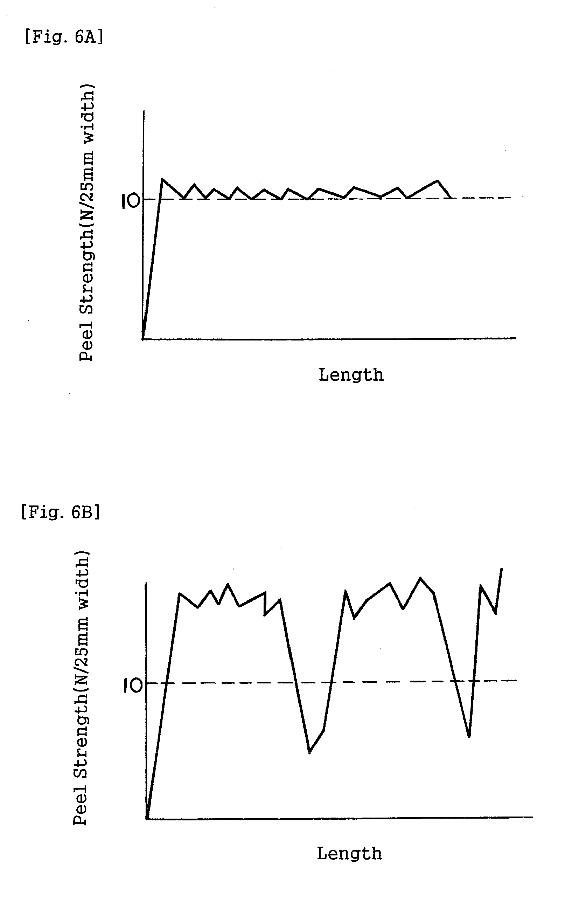

The substrate member 4 set to the above-mentioned vacuum suction mould 5 for the substrate member has a thickness of 3 mm and is made of PP, for example. It is injection moulded so that the air passages (not shown) may be formed and distributed. As for the door substrate member portion 4c which functions as the airbag door 7, similarly to the one that is described above with reference to with FIG. 6, the tear line 8 which is thin and double Y-shaped, for example, and allows four sides to open is formed by way of cutting of the post-processing.

In order that a predetermined inflation shape of an airbag body 7c may be obtained at a predetermined high speed when the airbag is in operation, the foam layer 12 made of PP foam (polypropylene foamed body) is fused to the outer skin 11 made of TPO to have a structure to be described later, a hot melt adhesive 13 is applied to the back (FIG. 1A) of the outer skin member 10, and the outer skin member 10, which is thermoplastic, is wound and kept in the shape of a role.
It is possible to use one in which the outer skin 11 has a thickness of 0.7 mm (for example), an outer skin single body fracture strength is 1.4 - 12.0 MPa, an outer skin single body fracture elongation is 200 to 600%, a foaming rate of the foam layer 12 is 15 times (for example), and a thickness thereof is 2 mm (for example).

Here, at least, when the foam layer 12 elongates and at least breaks following the fracture and deployment of the door substrate member portion 4c by properly determining a pressure force and a fusion temperature with respect to the outer skin 11, the adhesive strength of the foam layer 12 especially to the outer skin 11 in the area of the door substrate member portion 4c is determined so that it may not exfoliate from the outer skin 11. In particular, the peel strength between the outer skin 11 and the foam layer 12 is set to 10 - 50N/25mm width.

When the outer skin member 10 is formed integrally with the substrate member 4 by means of the thus constructed vacuum forming apparatus 100 for integral formation, the outer skin member 10 of a desired size is supported flat by the clamps 18, and the substrate member 4 is set to the core 5a of the vacuum suction mould 5 of a mould surface shape which follows the back of the substrate member 4 (FIG. 1B).
Subsequently, the outer skin member 10 is heat treated with a heater 19 to be a softened state. Then, the heater 19 is retracted, and the vacuum suction mould 5 and vacuum suction mould 16 are moved up and down towards the clamps 18 to clamp the moulds. The vacuum suction is carried out via a suction opening 16d, the air passages of the core 5a, and the air passages (communicated with the former air passages) of the substrate member 4 at substantially the same time.

Thereby, the foam layer 12 is contiguously bonded to the substrate member 4 by means of a hot melt and olefinic adhesive 13, and the outer skin 11 is sucked and closely held by the porous mould surface 16b of the cavity 16a over the whole area, and is formed along the mould surface 16b as the heat softened foam layer 12 is compressed or expanded, whereby the instrument panel 9 of "all olefin three layers" is manufactured.

The adhesive strength of the foam layer 12 especially to the door substrate member portion 4c is determined so that it may not exfoliate from the door substrate member portion 4c by a properly determined quantity of olefinic adhesive 13 at the time of the fracture and deployment. In particular, it is set to a peel strength of at least 10N/25mm width or more.
Further, a so-called "R slack" which may be generated at a corner portion, for example, as shown by a circle A in FIG. 1C is canceled by carrying out suction and formation along with the mould surface 16b. Furthermore, even in the case where a slight level difference is generated in an area of the substrate member 4, the surface quality of the outer skin member 10 is secured. As a hot melt type adhesion method, there may be mentioned application of a CR type adhesive or heat lamination of a hot melt film.

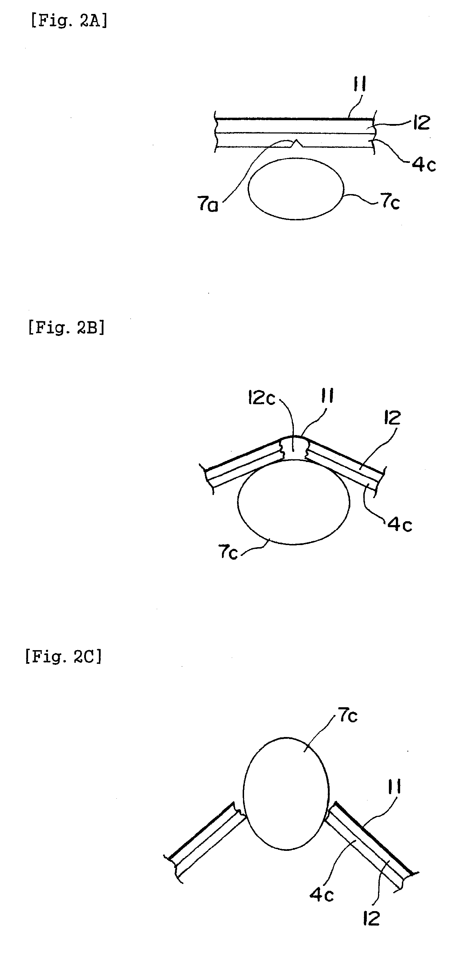

According to the thus formed airbag door, when the airbag door body 7c (FIG. 2A) inflates, explosion power is intensively applied to a base point area of the central tear line portion 8a and the V-shaped tear line portions 8b of both its ends, and the V-shaped tear line portions 8b are also urged in the deployment direction by way of the fracture and deployment of the central tear line portion 8a, so that the door substrate member portion 4c carries out the fracture and deployment along the double Y-shaped tear line 8 to allow four sides to open.

Following this fracture and deployment, the foam layer 12 elongates without exfoliating from the door substrate member portion 4c, and is broken throughout the whole thickness by the adjusted and concentrated stress, even with small amounts of the fracture and deployment of the door substrate member portion 4c (FIG. 2B). Further, as for the outer skin 11 bonded to the foam layer 12, due to this fracture, tensions are intensively generated in an area along a fracture area 12c throughout the whole thickness of the foam layer 12. Following a slight deployment of the foam layer 12 subsequent to the fracture, a corresponding portion of the outer skin 11 inflates and extends slightly to break.
Thereby, the airbag body 7c inflates further at a predetermined high speed, avoids an irregular formation due to expansion and nonfracture or poor fracture of the outer skin 11, and protrudes in a predetermined inflation shape from the airbag door 7 whose four sides are opened (FIG. 2C).

As described above, according to the preferred embodiment in accordance with the present invention, if the adhesive strength of the foam layer 12 to the door substrate member portion 4c is set as the peel strength of 10N/25mm width or more (at least), in the case where the outer skin single body fracture strength is 1.4 - 12.0 MPa, the outer skin single body fracture elongation is 200 to 600%, and the peel strength between the outer skin 11 and the foam layer 12 is set to 10 - 50N/25mm width, it is possible to fracture the outer skin 11 as the airbag body 7c inflates.
In other words, even if the adhesive strength of the foam layer 12 to the door substrate member portion 4c is as small as the peel strength of approximately 10N/25mm width due to the inclusion of bubbles etc., it is possible to reliably break the outer skin 11 when the airbag body deploys.
Further, since the range of management of the adhesive strength between the substrate member and the foam layer is widened, the cost for adhesives can be reduced by using the adhesives of a low adhesive strength intentionally.
Furthermore, the yield of formed products can be improved and the reliability of the airbag deployment performance can also be raised.

In addition, it is possible that the outer skin made of the resin, such as TP0 etc. may be blended with fiber type reinforcing agents, such as talc and a glass fiber, to thereby raise rigidity, be inextendible, and be easy to break. Thus, corresponding to the outer skin whose elongation at break is adjusted, the foaming rate and thickness of the foam layer can be determined.
As the outer skin, PVC (polyvinyl chloride) may be used. Foamed PVC may be used for the foam layer. Synthetic resins, such as PC (polycarbonate)/ABS (acrylonitrile butadiene styrene terpolymer), ASG (glass fiber reinforced acrylonitrile styrene), etc., can also be used for the substrate member. As for adhesion with respect to the substrate member, a solvent evaporation type can also be used assuming that a predetermined adhesive strength is securable.
Furthermore, even when, in a situation where the substrate member is set to one mould as described in the beginning, the outer skin is set to another mould, and the moulds are clamped, an urethane material is caused to foam among these so that the three-layered instrument panel is integrally formed, the present invention can be applied assuming that the predetermined adhesive strength is secured.

### Examples

Then, the airbag door for the motor vehicle and its manufacture method in accordance with the present invention will be further described with reference to Examples. In the present Examples, the effect was examined by actually experimenting with the airbag door having the structure as shown in the above-mentioned preferred embodiments.

### [Example 1]

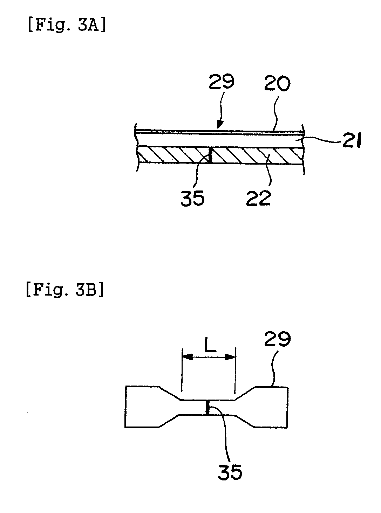

In Example 1, the elongation at break in compliance with JISK625 with respect to a sample piece imitating the outer skin member 10 in accordance with the above-mentioned preferred embodiments was examined. As shown in FIG. 3A, in this examination, PP foam sheets 21 as the foam layer, being prepared to have the foaming rate of 25 times and the thickness of 2 mm (Sample No.1), the foaming rate of 25 times and the thickness of 3 mm (Sample No.2), the foaming rate of 15 times and the thickness of 2 mm (Sample No.3), the foaming rate of 20 times and the thickness of 2 mm (Sample No.4), and no PP foam layer (sample No.5) were each interposed between a TP0 sheet 20 as the outer skin having a thickness of 0.7 mm, and a PP substrate member sheet 22 having a thickness of 3 mm, as shown in FIG. 3B, were cut into a shape equivalent to dumbbell No. 3, to make sample pieces 29. Two pieces for each are prepared for the examinations in vertical and lateral directions.

The substrate member sheet 22 was cut by a blade to have a cut line 35. The adhesive strength with respect to the substrate member sheet 22 of the PP foam sheet 21 was determined so as not to exfoliate at the time of the tension examination, and the adhesive strength with respect to the TP0 sheet 20 of the PP foam sheet 21 was determined so as not to exfoliate until the foam layer 12 elongated and broke following the fracture and deployment of the door substrate member portion 4c, at least.

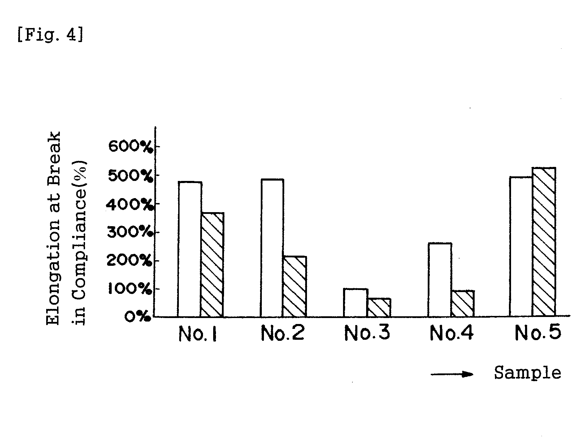

The examination results are shown in FIG. 4. The graph shown in FIG. 4 shows elongation rates at break of an area L in the case where a sample piece 29 is clamped at both ends and pulled in both directions at a speed of 500 mm/min, in which a solid bar is a result in a lengthwise direction and a hatched bar is a result in a lateral direction orthogonal to the lengthwise direction.
As is clear from the examination results, compared to the TP0 sheet 20 in itself, the TP0 sheet 20 had a tendency to fracture since the PP foam sheet 21 was bonded. In other words, it is considered that the tensions are concentrated at the TP0 sheet 20 in the fracture area of the PP foam sheet 21 which precedes and fractures since it is easy to break due to the foam.
Further, the concentrated stress was greatly adjusted by the foaming rate of the PP foam sheet 21 and it was confirmed that the lower foaming rate allowed the elongation at break of the sample piece 29 to be shortened more.
In addition, this elongation at break changes with thickness and it appears that it changes somewhat with material orientations in the vertical and lateral directions too.

### [Example 2]

In Example 2, the airbag door was formed by means of the vacuum forming apparatus for integral formation as shown in the above-mentioned preferred embodiment. When the substrate member was bonded to the outer skin member, even if the adhesive strength had been reduced by inclusion of air etc., the conditions of the outer skin member were examined which allowed the outer skin to fracture reliably at the time of airbag deployment.

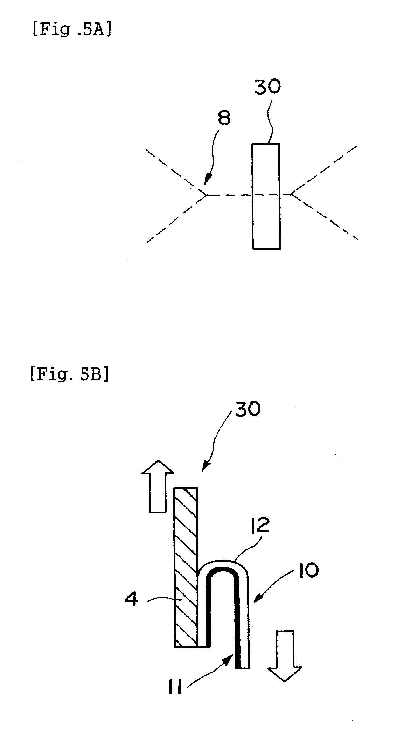

In this examination, as shown in FIG. 5A, a sample piece 30 of the airbag door including the tear line 8 was formed. The airbag body was expanded from the substrate member side towards the fixed sample piece 30, and it was examined whether or not the sample piece would fracture from the processed tear portion of the substrate member.
In addition, the sample pieces 30 were prepared, one of which had the maximum peel strength, between the substrate member 4 and the foam layer 12, of 10N/25mm width or more (Example), and one of which had the maximum of approximately 8N/25 mm width (Comparative Example). Measurement of the peel strength was carried out such that as shown in FIG. 5B, the outer skin member 10 and the substrate member 4 were pulled and peeled in the directions as shown by arrows, to find the force (N/25mm width) required at that time.

Further, in the case where bubbles do not exist between the substrate member 4 and the foam layer 12, the peel strength is substantially constant with respect to a peeled length, as shown in the graph of FIG. 6A. Further, in the case where there are bubbles between the substrate member 4 and the foam layer 12, a bubble portion has a weak adhesive strength, so that the peel strength value changes with parts as shown in FIG. 6B. In this examination, the sample piece 30 in either FIG. 6A or 6B was allowed as far as it had the predetermined maximum value (10N/25mm width or more, or around 8N/25mm width) of the peel strength.

The conditions of physical properties and examination results of the outer skin member with respect to the sample pieces 30 are shown in Tables 1 and 2 according to the peel strength of the substrate member 4 and the foam material 12 (outer skin member 10). It should be noted that, in Tables 1 and 2, a sign "O" showing as a fracture result indicates that the fracture was completed satisfactorily at the time of the airbag deployment, and a sign "X" indicates that the fracture was not completed at the time of the airbag deployment.

**TABLE 1**

| Peel Strength between Substrate Member and Foam Layer | Outer Skin Single Body Fracture Strength | Outer Skin Single Body Fracture Elongation | Peel Strength between Outer Skin and Foam Layer | Fracture Result |
|---|---|---|---|---|
| (N/25mm width) | (MPa) | (%) | (N/25mm width) | |
| Maximum Value 10 | 1.3 | 180 | 8 | X |
| | 1.4 | 200 | 10 | O |
| | 12.0 | 600 | 50 | O |
| | 13.0 | 620 | 60 | X |

**TABLE 2**

| Peel Strength between Substrate Member and Foam Layer | Outer Skin Single Body Fracture Strength | Outer Skin Single Body Fracture Elongation | Peel Strength between Outer Skin and Foam Layer | Fracture Result |
|---|---|---|---|---|
| (N/25mm width) | (MPa) | (%) | (N/25mm width) | |
| Maximum Value 8 | 1.3 | 180 | 8 | X |
| | 1.4 | 200 | 10 | X |
| | 12.0 | 600 | 50 | X |
| | 13.0 | 620 | 60 | X |

According to the examination results as shown in Tables 1 and 2, it has been confirmed that if the adhesive strength of the foam layer to the door substrate member portion is set as the peel strength of 10N/25mm width or more (at least), in the case where the outer skin single body fracture strength is 1.4 - 12.0 MPa, the outer skin single body fracture elongation is 200 to 600%, and the peel strength between the outer skin and the foam layer is set to the range of 10 - 50N/25mm width, it is possible to fracture the outer skin successfully as the airbag body inflates.

## Claims

1. An airbag door for a motor vehicle in which the airbag door is formed integrally with an instrument panel where an outer skin member, in which a foam layer is bonded to an outer skin, is bonded and laminated to a substrate member, and a tear line for performing fracture and deployment when an airbag is in operation is formed at a door substrate member portion of a substrate member, **characterized in that**
an adhesive strength between the foam layer and said door substrate member portion is set as a peel strength of at least 10N/25mm width or more, and
in said outer skin member, an outer skin single body elongation at break is set to 200 - 600%, an outer skin single body fracture strength is set to 1.4-12.0 MPa, and a peel strength between the foam layer and the outer skin is set to a range of 10 - 50N/25mm width.

2. The airbag door for motor vehicle according to claim 1, **characterized in that** said tear line is formed in a double Y shape where a central tear line portion and V-shaped tear line portions which become gradually narrower towards both ends of the central tear line portion are symmetrically provided on both sides,
a foaming rate and a thickness of said foam layer and a thickness of said outer skin portion are determined such that
a fracture portion which elongates following the fracture and deployment of said door substrate member portion and fractures throughout said whole thickness of said foam layer is formed, whereby
said outer skin portion with no tear line is caused to fracture by tensions concentrated at the fracture portion, to obtain a predetermined inflation shape of an airbag body.

3. A method of manufacturing the airbag door for motor vehicle according to claim 1 or 2, **characterized in that** a thermoplastic outer skin member in which the foam layer is joined to the outer skin is supported flat, a vacuum suction mould for the substrate member is provided on one of two sides in the up/down direction with respect to said outer skin member, a vacuum suction mould for the outer skin member, having a mould surface corresponding to a predetermined surface shape of said outer skin is provided on the other side in an opposite state,
the substrate member in which the tear line is formed at the door substrate member portion and the air passages are formed and distributed is set at the vacuum suction mould, and
said vacuum suction mould for the substrate member and said vacuum suction mould for the outer skin member are clamped in a situation where said outer skin member is softened by a heat-treatment, whereby said foam layer is bonded to said substrate member by carrying out vacuum suction from both sides by means of said vacuum suction moulds in a situation where the moulds are clamped, and said foam layer is compressed or expanded to form said outer skin member along a mould surface of the vacuum suction mould for the outer skin member.
